# EUROPÄISCHE PATENTSCHRIFT

(11) **EP 0 945 410 B1**
(45) Veröffentlichungstag und Bekanntmachung des Hinweises auf die Patenterteilung: **12.03.2003**
(21) Anmeldenummer: 99250074.4
(22) Anmeldetag: 12.03.1999
(51) Int. Cl.: C03B 9/41, C03B 9/193

(54) **Vorrichtung zur Positionsmessung des Pressstempels in einer Glasformmaschine**
Apparatus for measuring the position of a pressing plunger in a glass-making machine
Appareil pour mesurer la position d'un piston de pressage dans une machine de fabrication de verre

(30) Priorität: 20.03.1998 DE 19812141
(43) Veröffentlichungstag der Anmeldung: 29.09.1999
(73) Patentinhaber: Geisel, Hartmut, 38678 Clausthal-Zellerfeld (DE)
(72) Erfinder: Geisel, Hartmut, 38678 Clausthal-Zellerfeld (DE)
(74) Vertreter: Seewald, Jürgen, Dipl.-Ing.

(56) Entgegenhaltungen:
- EP-A- 0 488 136
- DE-C- 3 401 465
- DE-C- 19 812 141
- US-A- 5 139 559

## Beschreibung

Bei der Produktion von Hohlglasartikeln werden beim Preßblasprozeß in einer sogenannten I.S.-Glasformmaschine Posten schmelzflüssigen Glases mit vorgegebener Masse nacheinander von einem aus einem Speiser austretenden Strang abgetrennt, in ein Formwerkzeug der Formmaschine eingebracht und durch einen in den Posten eindringenden Preßstempel formschlüssig zu einem weiterverarbeitbaren Rohling, auch Külbel genannt, verformt, wobei der Preßstempel an einer Kolbenstange einer Kolben/Zylindereinheit angebracht ist und der Kolben mit einer Vorrichtung zur permanenten Messung seiner Position während seines Hubweges zusammenwirkt.

Diese Positionsmessung ist wichtig, weil daraus der Preßvorgang kontrollierbar ist und Schlüsse über den Füllgrad der Form, die Eindringtiefe des Preßstempels und damit über die Qualität des Rohlings gezogen werden können, aus denen Korrekturmaßnahmen abgeleitet werden können.

Eine Einrichtung der vorgenannten Art ist aus der DE 34 01 465 C1 bekannt. Dort trägt die Kolbenstange einen ringförmigen Kern als Betätigungselement zur Änderung der Induktivität einer Spule. Die Spule befindet sich in einer ringförmigen Fassung im oberen Teil eines Zylinders unmittelbar unterhalb der Kolbenstangenlagerung. Diese Bauweise hat den Nachteil, daß lediglich eine kurze Strecke des Kolbenhubs meßtechnisch erfaßt werden kann und eine galvanische Steckverbindung erforderlich ist, die beim Wechsel des Zylinders gelöst und wieder befestigt werden muß. Angesichts der begrenzten Raumverhältnisse ist es schwierig, die Steckverbindung mit dem Kabel zuverlässig zu bedienen.

Solche Steckverbindungen, die auch in aus der US-PS 5,139,559 und der EP 488 136 A2 bekannten Vorrichtungen vorhanden sind, leiden unter Störanfälligkeit, und sie arbeiten bei Verschmutzung nicht mehr einwandfrei und können durch Verschmutzung sogar zerstört werden. Alle bekannten Sensoren von solchen Kolben-Positionsmeßeinrichtungen erfordern erheblichen mechanischen Aufwand.

Der Erfindung liegt, ausgehend von einer Vorrichtung gemäß dem Oberbegriff des Anspruchs 1, die Aufgabe zugrunde, eine Steckverbindung zu vermeiden und eine kompakte, preiswerte Bauweise bei hoher Genauigkeit zu erzielen, die einen problemlosen Austausch des Zylinders trotz begrenzter Raumverhältnisse ermöglicht.

Die gestellte Aufgabe wird gemäß der Erfindung bei der eingangs genannten Vorrichtung dadurch gelöst, daß der Sensor der Positionsmeßvorrichtung aus einem zweiteiligen Oszillator aufgebaut ist, daß der erste Teil aus dem aus einer Spule und aus einem Kondensator gebildeten Resonanzkreis besteht, daß der Kondensator durch relativ zueinander bewegbare Kondensatorelemente gebildet ist, daß der Resonanzkreis in dem Zylinder der Kolben/Zylinder-Einheit so angeordnet ist, daß die Frequenz des Resonanzkreises bei Änderung der Position der eines der Kondensatorelemente bildenden Kolbenstange durch die damit verbundene Kapazitätsänderung veränderbar ist, daß der zweite Teil aus der restlichen, von dem ersten Teil galvanisch und mechanisch getrennten Schaltung des Oszillators und einer Koppelspule besteht, die induktiv mit der Spule des Resonanzkreises derart gekoppelt ist, daß dieser die Schwingungsfrequenz des Oszillators bestimmt.

Durch den zweiteiligen Aufbau des Sensors kann der Resonanzkreis ohne galvanische Anschlüsse kompakt in das die Kolben/Zylinder-Einheit enthaltende Maschinenelement eingebracht werden, so daß ein Auswechseln des Zylinders problemlos möglich ist. Ein weiterer Vorteil ist, daß die Meßvorrichtung sich kostengünstig herstellen läßt, wobei hohe Genauigkeiten beim Positionsnachweis erzielt werden.

In praktischer Ausgestaltung der Erfindung ist die Koppelspule des Oszillators in einer in der Glasformmaschine ortsfesten Aufstellplatte angeordnet, die auch die Anschlüsse zur Zuführung der für den Betrieb des Oszillators erforderlichen elektrischen Energie sowie zur Abführung des Oszillator-Ausgangssignals enthält, und auf der Aufstellplatte ist lösbar die Kolben/Zylinder-Einheit mit dem Resonanzkreis angebracht, wobei in einer Öffnung der Aufstellplatte die Koppelspule und in einer Öffnung im Zylinderboden die Resonanzkreisspule einander gegenüberliegend angeordnet sind.

Bei einer praktischen Ausführungsform der Erfindung ist auf der Innenseite des Rohrs für die Zuführung der Preßstempel-Kühlluft, über dem die hohle Kolbenstange translatorisch bewegbar ist, an dem der Aufstellplatte zugekehrten Ende die Resonanzkreisspule angeordnet, deren Zuleitungen mit zwei vorzugsweise gleich großen Kondensatorflächen verbunden sind, die ebenfalls auf der Innenseite des Kühlluftrohrs angebracht sind und sich über die Länge des Beeinflussungsbereichs der hohlen Kolbenstange erstrecken. Alle galvanischen Anschlüsse sind also permanent an einem ortsfesten Maschinenteil angebracht und brauchen bei einer Auswechslung der Kolben/Zylinder-Einheit nicht angefaßt zu werden. Vorzugsweise besteht das Kühlluftrohr und ein am Zylinderboden festlegbarer Flanschteil einteilig aus einem isolierenden Material, z.B. Keramik.

Bei einer bevorzugten Abwandlung der Meßvorrichtung befindet sich in dem Kühlluftrohr ein weiteres Rohr, wobei die Resonanzspule, deren Zuleitungen und die Kondensatorflächen in dem Zwischenraum zwischen den beiden Rohren angeordnet sind und alle diese Teile mit einem am Zylinderboden festlegbaren Flanschteil zu einer hermetisch dichten Einheit verklebt sind.

Das Oszillator-Ausgangssignal wird vorzugsweise einer Frequenzmeßeinrichtung zugeführt, an die eine Auswerte-Elektronik zum Nachweis der Position des mit der Kolbenstange verbundenen Preßstempels angeschlossen ist.

Die Stromversorgung des Oszillators und die Abführung der Oszillator-Ausgangsspannung erfolgt vorzugsweise über ein Koaxialkabel, wobei Innenleiter und Abschirmung die Gleichstromversorgung übernehmen und die abgeführte Oszillator-Ausgangsspannung der Versorgungs-Gleichspannung überlagert wird.

Die Erfindung wird nachfolgend anhand von in der Zeichnung dargestellten Ausführungsbeispielen näher erläutert. In den Zeichnungen stellen dar:
- Fig. 1: schematisch einen Längsschnitt durch eine translatorisch arbeitende Positionsmeßvorrichtung;
- Fig. 2: eine rotatorisch arbeitende Meßvorrichtung als Draufsicht;
- Fig. 3: eine elektrische Schaltungsanordnung einer erfindungsgemäßen Positionsmeßvorrichtung;
- Fig. 4: eine praktische Ausführungsform der erfindungsgemäßen Meßvorrichtung in einem Preßzylinder einer Glasformmaschine und
- Fig. 5: vergrößerte Einzelheiten aus Fig. 4.

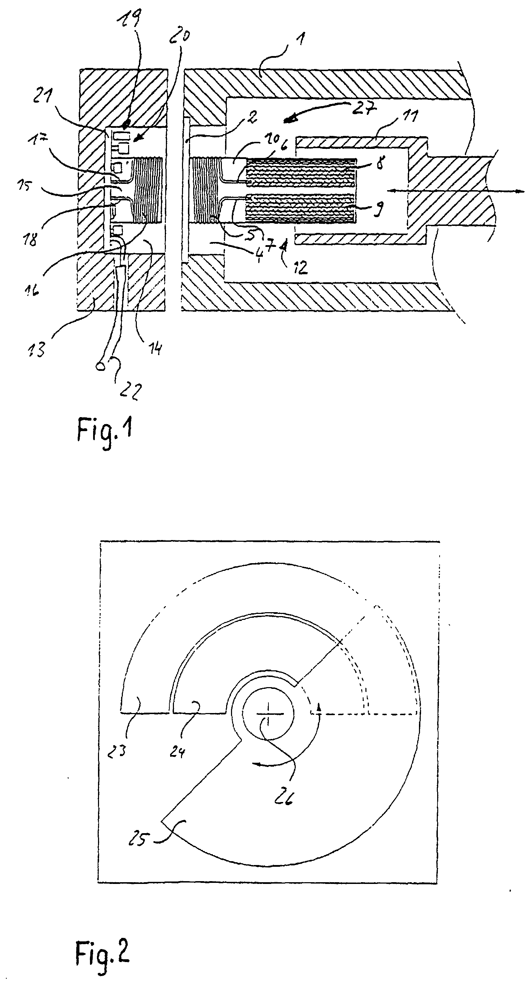

Bei der in Fig. 1 schematisch als Längsschnitt dargestellten Positionsmeßvorrichtung ist in einem Gehäuseteil 1 einer Maschine, z.B. eines Zylinders einer Glasformmaschine, ein Halteelement 2 angebracht, von dem ein Dorn 10 in die Öffnung 4 des Gehäuseteils 1 ragt und eine Resonanzkreisspule 5 trägt, deren Drahtenden 6 und 7 jeweils mit einer Kondensatorfläche 8 und 9 verbunden sind, die in Verbindung mit einem Betätigungselement 11 Elemente eines Kondensators 12 bilden. Die Kondensatorflächen 8 und 9 sind Metallfolien, die auf dem Dorn 10 achssymmetrisch so aufgebracht sind, daß sie den Dorn fast halbkreisförmig umschlingen und sich längs des Dorns 10 erstrecken, ohne sich zu berühren. Das elektrisch leitfähige Betätigungselement 11, das beispielsweise der mit dem Preßstempel einer Glasformmaschine verbundene Kolben ist, ist als Rohr ausgebildet und ragt mit geringem Abstand über den Dorn 10 mit den Kondensatorflächen 8 und 9. Die Kolbenstange bildet ein weiteres Element des Kondensators. Das Halteelement 2 und der Dorn 10 sind aus elektrisch isolierendem Material. Das Gehäuseteil 1 besteht vorzugsweise aus Metall oder einem anderen elektrisch leitfähigen Material. Das Betätigungselement 11 dient dazu, translatorisch über die Kondensatorflächen 8 und 9 bewegt zu werden und die Kapazität, die von den Kondensatorflächen 8 und 9 gebildet wird, stellungsabhängig zu verändern, wodurch sich die Resonanzfrequenz des aus der Resonanzkreisspule 5 und dem Kondensator 12 gebildeten Resonanzkreises 27 ändert. Der Kondensator 12 erreicht seine höchste Kapazität, wenn das Betätigungselement 11 die Kondensatorflächen 8 und 9 ganz überdeckt. Gegenüber der Öffnung 4 des Gehäuseteils 1 befindet sich ein weiteres Gehäuseteil 13, z.B. die Aufstellplatte für eine Kolben/Zylinder-Einheit in der Glasformmaschine, das vorzugsweise auch aus Metall oder einem anderen leitfähigen Material besteht und mit einer Öffnung 14 versehen ist. In dieser Öffnung 14 befindet sich auf einem elektrisch isolierenden Dorn 15 eine Koppelspule 16. Die Drahtenden 17 und 18 der Koppelspule 16 sind mit einer Oszillatorschaltung 19 verbunden, deren frequenzbestimmender Schwingkreis durch die Resonanzspule 5 und die Kondensatorelemente 8, 9, 11 gebildet wird, wobei die Bauelemente 20 der Oszillatorschaltung sich auf einer Platine 21 befinden. Der Dorn 15 ist an der Platine 21 befestigt und wird dadurch in der Öffnung 14 gehalten. Wenn die beiden Gehäuseteile 1 und 13 entsprechend Fig. 1 voreinanderstehen, sind die Koppelspule 16 und die Resonanzkreisspule 5 transformatorisch gekoppelt. Wird der Oszillator 19 über das Stromversorgungskabel 22 mit elektrischer Energie versorgt, so arbeiten die so voreinandergestellten und durch ein elektromagnetisches Feld gekoppelten Baugruppen als Oszillator, dessen hochfrequente Ausgangsspannung über das Kabel zu einer hier nicht gezeigten Frequenzmeßeinrichtung mit Auswerte-Elektronik geführt wird. Die erzeugte Frequenz ist ein Maß für die Stellung des Betätigungselementes 11 innerhalb des Gehäuseteils 1.

Während Fig. 1 eine Ausführungsform zeigt, bei der die Frequenzänderung des Resonanzkreises durch eine translatorische Bewegung erzeugt wird, stellt Fig. 2 eine Abwandlung dar, bei der diese Frequenzänderung durch eine rotatorische Verstellbewegung erfolgt. Hier sind die Kondensatorflächen 23 und 24 kreissegmentförmig angeordnet, und auch das Betätigungselement 25 ist als Kreissegment ausgebildet, das dazu bestimmt ist, durch Drehen um eine Achse 26 die Kapazität der halbkreisförmigen Kondensatorflächen 23 und 24 stellungsabhängig zu verändern, wodurch sich die Resonanzfrequenz des nicht dargestellten Resonanzkreises 27 ändert. Der Oszillator 19 mit der Koppelspule 16, der Resonanzkreisspule 5 sowie die zugehörigen Gehäuseteile 1 und 13 mit Öffnungen 4 und 14 sind nicht dargestellt, da diese Teile identisch mit den in Fig. 1 gezeigten Teilen sind.

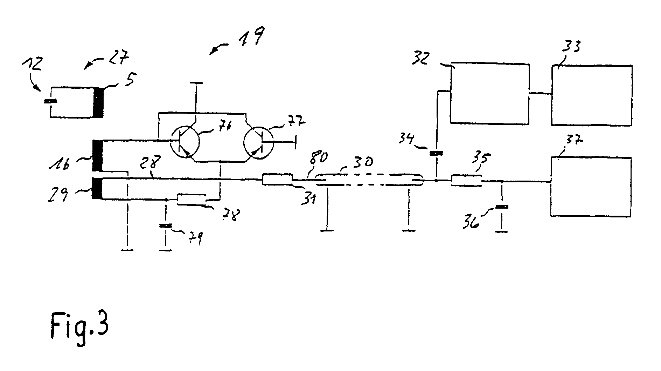

Fig. 3 zeigt ein Schaltbild der Oszillatorschaltung 19, die aus dem Resonanzkreis 27, zwei Transistoren 76 und 77, einem Widerstand 78 und einem Kondensator 79 besteht. Hier wird vorteilhafterweise die Oszillatorschaltung über eine Versorgungsleitung 28 aus der Gleichstromquelle 37 über eine Spule 29 gespeist, die neben der Koppelspule 16 des Oszillators 19 angebracht ist. Auf diese Weise kann ein einadriges Koaxialkabel 30 als Zuführung der Oszillator-Ausgangsspannung zu einer Frequenzmeßeinrichtung 32 und zur Gleichstromversorgung des Oszillators dienen. Zwischen der Spule 29 und dem Kabelbeginn 80 ist zur Anpassung an den Wellen-Widerstand des Koaxialkabels 30 ein entsprechender Widerstand 31 angeordnet. Das Koaxialkabel 30 führt zu einer Frequenzmeßeinrichtung 32, die mit einer Auswerte-Einheit 33 verbunden ist. Die Trennung von Hochfrequenz und Gleichspannung erfolgt durch einen Kondensator 34. Ein zur Anpassung an das Koaxialkabel 30 erforderlicher Widerstand 35 verbindet die stromführende Ader des Koaxialkabels 30 mit der Gleichstromversorgung 37. Ein Kondensator 36 verhindert, daß die Hochfrequenz sich weiter ausbreiten kann.

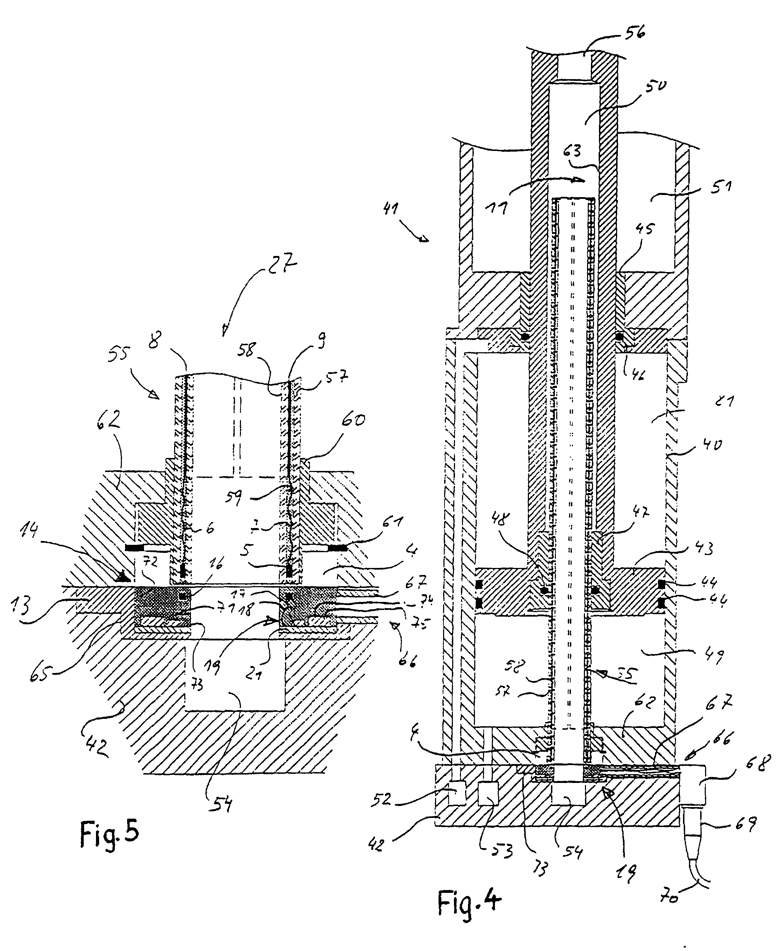

Fig. 4 und 5 zeigen eine praktische Ausführung für eine Positionsmeßvorrichtung in einer Glasformmaschine, mit der die Bewegung und Stellung eines Preßstempels angezeigt werden kann.

Ein beidseitig mit Druckluft beaufschlagbarer Kolben mit Kolbenstange 43 ist in einem Zylinder 40 verschiebbar angeordnet. Kolbenringe 44, Kolbenstangen-Lagerung 45 mit Dichtung 46 sowie Kühlluft-Rohrlagerung 47 mit Dichtung 48 sorgen für pneumatische Trennung der einzelnen Luftkammern 49, 50, 51 und 81. Um den Kolben zu bewegen, wird Druckluft über die Luftkanäle 52 und 53 durch die Aufstellplatte 42 von nicht gezeigten Ventilen gesteuert. Unabhängig von der Kolbenbewegung wird Kühlluft durch einen Luftkanal 54 in der Aufstellplatte 42 durch ein Kühlluftrohr 55 und die innere Bohrung 56 des Kolbens mit der Kolbenstange 43 zu einem nicht gezeigten Preßwerkzeug geführt. Das Kühlluftrohr 55 bildet einen Teil der Positionsmeßvorrichtung. Das Kühlluftrohr 55 besteht aus zwei ineinandergesteckten elektrisch isolierenden Rohren 57, 58, die mit Vergußmasse 59 untereinander verbunden sind, wobei zwischen den Rohrwandungen an der unteren Stirnseite die Resonanzkreisspule 5 angebracht ist, die mit ihren Drahtenden 6, 7 mit jeweils einer der Kondensatorflächen 8 und 9 verbunden ist. Die Kondensatorflächen 8, 9 befinden sich ebenso zwischen den Wandungen der ineinandergesteckten Rohre 57, 58 und erstrecken sich über deren restliche Länge. Eine Vergußmasse 59 hält die Rohre 57, 58, die Resonanzkreisspule 5 und die Kondensatorflächen 8 und 9 zusammen und versiegelt sie hermetisch. Die Rohre 57, 58 sind am unteren Ende mit einem elektrisch isolierenden Flanschteil 60 verklebt und mit einem Sprengring 61 im Boden 62 des Zylinders 40 befestigt. Eine Kühlluft-Rohrlagerung 47 mit Dichtung 48 und Kolben mit Kolbenstange 43 übernimmt die Führung des Kühlluftrohres 55 und die Dichtung der Luftkammer 49 gegenüber der Luftkammer 50. Die Resonanzkreisspule 5 und die mit ihr verbundenen Kondensatorflächen 8 und 9 und die Kolbenstange bilden den elektrischen Resonanzkreis 27. Die Wandung 63 der Bohrung des Kolbens mit der Kolbenstange 43 wirkt auf die Kondensatorflächen 8, 9 als Betätigungselement 11 und verändert die aus den Kondensatorflächen 8, 9 gebildete Kapazität, was zur Veränderung der Resonanzfrequenz führt. Die am unteren Ende der Rohre 57, 58 eingelagerte Resonanzkreisspule 5 ragt in eine Öffnung 4 des Zylinderbodens 62. In der Aufstellplatte 52, die mit einer entsprechenden Bohrung 65 mit Nut 66 versehen ist, ist ein Rohr 67 vorgesehen, welches im Bereich des Zylinderbodens in einer Nut 66 verläuft und mit einer elektrischen Steckverbindung 68 eine Einheit bildet. Durch das Rohr 67 verlaufen elektrische Verbindungsdrähte 74, 75 zwischen der Steckverbindung 68 und der Platine 21. Der Stecker 69 und Kabel 70 besorgen die Verbindung der Oszillatorschaltung mit einer nicht gezeigten Frequenzmeßeinrichtung, Gleichstromversorgung und Auswerte-Elektronik. Im Gehäuse 13 befindet sich eine Platine 21, welche die Bauelemente 71 der Oszillatorschaltung 19 trägt und mit den Enden 17, 18 der Koppelspule 16 verbunden ist. Die Koppelspule 16 ist in einer Öffnung 14 des Gehäuses 13 konzentrisch durch eine Vergußmasse 72 fixiert. Eine Bohrung 73 verläuft koaxial durch das Gehäuse 13 und die Koppelspule 16 und bildet einen Teil des Kühlluftkanals 54.

Bei der dargestellten Gegenüberstellung der Spulen 5 und 16 besteht eine transformatorische Kopplung zwischen der Oszillatorschaltung 19 und dem Resonanzkreis 27, was zur Folge hat, daß die Anordnung als elektronischer Oszillator mit der durch den Resonanzkreis 27 bestimmten Frequenz schwingt.

Es ist auch eine einfachere Meßanordnung denkbar, bei der das innere Rohr entfällt. In diesem Fall werden die Kondensatorflächen 8, 9 und die Resonanzkreisspule innen auf dem Kühlluftrohr angebracht und mit einem Überzugslack versiegelt. Hier kann das Kühlluftrohr und ein am Zylinderboden befestigbarer Flansch einteilig aus isolierendem Material, z.B. Keramik, bestehen.

In jedem Fall übernimmt die Meßvorrichtung die mechanischen Funktionen des Kühlluftrohres.

## Patentansprüche

1. Vorrichtung zur Positionsmessung des Preßstempels in einer Glasformmaschine, bei der Posten schmelzflüssigen Glases mit vorgegebener Masse nacheinander von einem aus einem Speiser austretenden Strang abgetrennt, in ein Formwerkzeug einer Formmaschine eingebracht und durch den in den Posten eindringenden Preßstempel formschlüssig verformt werden, wobei der Preßstempel an einer Kolbenstange (43) einer Kolben/Zylinder-Einheit (40, 43) angebracht ist und der Kolben mit der Vorrichtung für eine permanente Messung seiner Position während seines Hubweges zusammenwirkt, **dadurch gekennzeichnet, daß** der Sensor der Positionsmeßvorrichtung aus einem zweiteiligen Oszillator (19) aufgebaut ist, daß der erste Teil aus dem aus einer Spule (5) und aus einem Kondensator (12) gebildeten Resonanzkreis (27) besteht, daß der Kondensator durch relativ zueinander bewegbare Kondensatorelemente (8, 9, 43) gebildet ist, daß der Resonanzkreis (27) in dem Zylinder (40) der Kolben/Zylinder-Einheit (40, 43) so angeordnet ist, daß die Frequenz des Resonanzkreises (27) bei einer Änderung der Position der eines der Kondensatorelemente bildenden Kolbenstange (43) durch die damit verbundene Kapazitätsänderung veränderbar ist, daß der zweite Teil aus der restlichen, von dem ersten Teil galvanisch und mechanisch getrennten Schaltung des Oszillators und einer Koppelspule (16) besteht, die induktiv mit der Spule (5) des Resonanzkreises (27) derart gekoppelt ist, daß dieser die Schwingungsfrequenz des Oszillators bestimmt.

2. Vorrichtung nach Anspruch 1, **dadurch gekennzeichnet, daß** die Koppelspule (16) des Oszillators (19) in einer in der Glasformmaschine ortsfesten Aufstellplatte angeordnet ist, die auch die Anschlüsse zur Zuführung der für den Betrieb des Oszillators erforderlichen elektrischen Energie sowie zur Abführung des Oszillator-Ausgangssignals enthält, und daß auf der Aufstellplatte (42) lösbar die Kolben/Zylinder-Einheit (40, 43) mit dem Resonanzkreis (27) angebracht ist, wobei in einer Öffnung (20) der Aufstellplatte (42) die Koppelspule (16) und in einer Öffnung (4) im Zylinderboden (62) die Resonanzkreisspule (5) einander gegenüberliegend angeordnet sind.

3. Vorrichtung nach Anspruch 1 oder 2, **dadurch gekennzeichnet, daß** auf der Innenseite des elektrisch isolierenden Kühlluftrohrs (57) für die Zuführung der Preßstempel-Kühlluft, über dem die hohle Kolbenstange (43) der Kolben/Zylinder-Einheit translatorisch bewegbar ist, an dem der Aufstellplatte (42) zugekehrten Ende die Resonanzkreisspule (5) angeordnet ist, deren Zuleitungen (6, 7) mit zwei vorzugsweise gleich großen Kondensatorflächen (8, 9) verbunden sind, die ebenfalls auf der Innenseite des Kühlluftrohrs angebracht sind und sich über die Länge des Beeinflussungsbereichs der Kolbenstange (43) erstrecken.

4. Vorrichtung nach Anspruch 3, **dadurch gekennzeichnet, daß** das Kühlluftrohr (57) und ein am Zylinderboden (67) festlegbarer Flanschteil (60) einteilig aus einem isolierenden Material, z.B. Keramik, bestehen.

5. Vorrichtung nach Anspruch 3, **dadurch gekennzeichnet, daß** sich in dem Kühlluftrohr (57) ein weiteres Rohr (58) befindet und die Resonanzspule (5), deren Zuleitungen und die Kondensatorflächen (8, 9) in dem Zwischenraum zwischen den beiden Rohren (57, 58) angeordnet sind, und alle diese Teile mit einem am Zylinderboden (62) festlegbaren Flanschteil (60) zu einer hermetisch dichten Einheit verklebt sind.

6. Vorrichtung nach einem der vorhergehenden Ansprüche, **dadurch gekennzeichnet, daß** das Oszillator-Ausgangssignal einer Frequenzmeßeinrichtung (32) zugeführt wird, an die eine Auswerte-Elektronik (33) zum Nachweis der Position des mit der Kolbenstange (43) verbundenen Preßstempels angeschlossen ist.

7. Vorrichtung nach Anspruch 6, **dadurch gekennzeichnet, daß** die Stromversorgung des Oszillators (19) und die Abführung der Oszillator-Ausgangsspannung über ein Koaxialkabel (30) erfolgt, wobei Innenleiter und Abschirmung die Gleichstromversorgung übernehmen und die abgeführte Oszillator-Ausgangsspannung der Versorgungs-Gleichspannung überlagert wird.

## Claims

1. Device for determining the position of the ram in a glass-moulding machine, in which lumps of molten glass of predetermined mass are successively separated off from a strand issuing from a feeder, introduced into a mould of a moulding machine and shaped to fit the mould by the ram penetrating into the lump, the ram being mounted on a piston rod (43) of a piston/cylinder unit (40, 43) and the piston interacting with the device for permanent determination of its position during its stroke, **characterised in that** the sensor of the position-determining device is made up of a two-part oscillator (19), **in that** the first part consists of the oscillation circuit (27) made up of a coil (50) and of a capacitor (12), **in that** the capacitor is made up of capacitor elements (8, 9, 43) that are able to move relative to one another, **in that** the oscillation circuit (27) is so arranged in the cylinder (40) of the piston/cylinder unit (40, 43) that the frequency of the oscillation circuit (27) can be changed in the event of a change in the position of the piston rod (43), making up one of the capacitor elements, by means of the change in capacitance associated therewith, **in that** the second part consists of the remaining circuit of the oscillator, which circuit is electrically and mechanically separated from the first part, and a coupling coil (16), which is inductively coupled to the coil (5) of the oscillation circuit (27) in such a way that this determines the oscillation frequency of the oscillator.

2. Device according to Claim 1, **characterised in that** the coupling coil (16) of the oscillator (19) is arranged in a mounting plate that is in a fixed location in the glass-moulding machine and that also contains the connections for supplying the electrical energy required for operation of the oscillator and for delivering the oscillator output signal, and **in that** the piston/cylinder unit (40, 43) with the oscillation circuit (27) is arranged on the mounting plate (42) such that it can be detached, the coupling coil (16) being arranged in an opening (20) in the mounting plate (42) and the oscillation circuit coil (5) in an opening (4) in the cylinder base (62) such that said coupling coil (16) and oscillation circuit coil (5) are opposite one another.

3. Device according to Claim 1 or 2, **characterised in that** the oscillation circuit coil (5) is arranged, at the end facing the mounting plate (42), on the inside of the electrically insulating cooling air tube (57) for supplying cooling air to the ram, over which tube the hollow piston rod (43) of the piston/cylinder unit can move in translational movement, the feed lines (6, 7) of said oscillation circuit coil are connected to two capacitor surfaces (8, 9), which are preferably of equal size and which are likewise installed on the inside of the cooling air tube and extend over the length of the range of influence of the piston rod (43).

4. Device according to Claim 3, **characterised in that** the cooling air tube (57) and a flange part (60) that can be fixed to the cylinder base (67) consist of a single piece made of an insulating material, for example ceramic.

5. Device according to Claim 3, **characterised in that** there is a further tube (58) in the cooling air tube (57) and the oscillating coil (5), the feed lines and the capacitor surfaces (8, 9) of which are arranged in the space between the two tubes (57, 58), and all these parts are glued to a flange part (60), which can be fixed to the cylinder base (62), to give a hermetically sealed unit.

6. Device according to one of the preceding claims, **characterised in that** the oscillator output signal is fed to a frequency-measuring device (32), to which computation electronics (33) for detection of the position of the ram joined to the piston rod (43) are connected.

7. Device according to Claim 6, **characterised in that** the power supply to the oscillator (19) and the delivery of the oscillator output voltage takes (sic) place via a coaxial cable (30), internal conductors and screening being responsible for the supply of direct current and the oscillator output voltage delivered being superimposed on the direct voltage of the supply.

## Revendications

1. Dispositif destiné à mesurer la position du fouloir dans une machine à former le verre, dans laquelle des lots de verre en fusion d'une masse prédéterminée sont successivement coupés d'une billette sortant d'un avant-corps, introduits dans un gabarit d'une machine à mouler et déformés de manière adaptée à la forme du gabarit par le fouloir pénétrant dans le lot, le fouloir étant disposé sur une tige de piston (43) d'une unité de piston/vérin (40, 43) et le piston concourant avec un dispositif de mesure permanente de sa position pendant sa course, **caractérisé en ce que** le détecteur du dispositif de mesure de position est constitué par un oscillateur (19) en deux parties, que la première partie est un circuit à résonance (27) formé par une bobine (5) et un condensateur, que le condensateur est formé par des éléments de condensateur (8, 9, 43) pouvant être déplacés relativement l'un par rapport à l'autre, que le circuit à résonance (27) est disposé dans le vérin (40) de l'unité piston/vérin (40, 43) de manière que la fréquence du circuit à résonance (27) soit modifiable, lors d'une modification de la position de la tige de piston (43) formant un des éléments du condensateur, par le changement de capacité entraîné par cette modification, et que la seconde partie est constituée par le reste du montage de l'oscillateur, séparé galvaniquement et mécaniquement de la première partie, ainsi que par une bobine de couplage (16), qui est couplée, par inductance, à la bobine (5) du circuit de résonance (27) de manière que celui-ci détermine la fréquence d'oscillation de l'oscillateur.

2. Dispositif suivant la revendication 1, **caractérisé en ce que** la bobine de couplage (16) de l'oscillateur (19) est disposée dans une plaque de montage stationnaire dans la machine à mouler le verre, plaque qui contient également les raccords d'alimentation de l'énergie électrique nécessaire au fonctionnement de l'oscillateur, ainsi que les raccords de sortie du signal de sortie de l'oscillateur, et **en ce que** sur la plaque de montage (42) sont disposés de manière amovible l'unité piston/vérin (40, 43) et le circuit de résonance (27), dans une ouverture (20) de la plaque de montage (42) étant disposée la bobine de couplage (16) et, dans une ouverture (4) dans le fond du vérin (62) étant disposée la bobine du circuit de résonance, de manière qu'elles soient opposées l'une à l'autre.

3. Dispositif suivant la revendication 1 ou 2, **caractérisé en ce que** sur la face interne du tuyau d'air de refroidissement (57) à isolation électrique servant à l'alimentation en air de refroidissement du fouloir, au-dessus duquel la tige de piston creuse (43) de l'unité piston/vérin est déplaçable par translation, à l'extrémité tournée vers la plaque de montage (42) est disposée la bobine du circuit de résonance (5), dont les conduites d'alimentation (6, 7) sont reliées à deux surfaces de condensateur (8, 9), de préférence dimensionnées identiques, qui sont également fixées sur la face interne du tuyau d'air de refroidissement et qui s'étendent sur toute la longueur de la zone d'influence de la tige de piston (43).

4. Dispositif suivant la revendication 3, **caractérisé en ce que** le tuyau d'air de refroidissement (57) et un élément de bride (60) pouvant être arrêté sur le fond du vérin (67) forment une seule pièce en une matière isolante, par exemple en céramique.

5. Dispositif suivant la revendication 3, **caractérisé en ce qu**'un autre tuyau (58) se trouve dans le tuyau d'air de refroidissement (57) et que la bobine de résonance (5), les conduites d'alimentation de celle-ci et les surfaces de condensateur (8, 9) sont disposées dans l'espace intermédiaire entre les deux tuyaux (57, 58), et que toutes ces pièces sont collées à un élément de bride (60) pouvant être arrêté sur le fond du vérin (62) de manière à former une unité hermétiquement étanche.

6. Dispositif suivant une des revendications précédentes, **caractérisé en ce que** le signal de sortie de l'oscillateur est amené à un dispositif de mesure de fréquence (32), à laquelle est raccordé un dispositif d'analyse électronique afin de justifier la position du fouloir relié à la tige de piston (43).

7. Dispositif suivant la revendication 6, **caractérisé en ce que** l'alimentation en courant de l'oscillateur (19) et l'élimination de la tension de sortie de l'oscillateur ont lieu par l'intermédiaire d'un câble coaxial (30), le conducteur intermédiaire et le blindage assurant l'alimentation en courant continu et la tension de sortie de l'oscillateur étant superposée à la tension continue de l'alimentation.
